# EUROPÄISCHE PATENTANMELDUNG

(11) **EP 4 106 079 A1**
(43) Veröffentlichungstag der Anmeldung: **21.12.2022**
(21) Anmeldenummer: 22020155.2
(22) Anmeldetag: 07.04.2022
(51) Int. Cl.: H01M 10/613, H01M 10/625, H01M 10/6555, H01M 10/6557, H01M 10/6567, H01M 50/204, H01M 50/209, H01M 50/249, H01M 50/289, H01M 50/291, H01M 50/293

(54) **FLÜSSIGKEITSGEKÜHLTES KRAFTFAHRZEUG-TRAKTIONSBATTERIEMODUL**

(30) Priorität: 17.06.2021 DE 102021115657
(71) Anmelder: Dr. Ing. h.c. F. Porsche Aktiengesellschaft, 70435 Stuttgart (DE)
(72) Erfinder: Kellner, Philipp, 71272 Renningen (DE); Volkmer, Christopher, 75223 Niefern-Öschelbronn (DE)

(57) **Zusammenfassung**

Die Erfindung bezieht sich auf ein flüssigkeitsgekühltes Kraftfahrzeug-Traktionsbatteriemodul (10) mit einem steifen und fuiddichten Modulgehäuse (20), in dem mehrere plattenartige identische Batteriezellen (30,30') eingehaust sind, wobei zwischen den Batteriezellen (30,30') mehrere identische deformierbare Kompressionselemente (40,40') vorgesehen sind und die Batteriezellen (30,30') durch eine modulinterne Flüssigkeitskühlung gekühlt werden. Zwischen zwei zueinander benachbarten Batteriezellen (30,30') sind steife Kühlplatten (50) angeordnet sind, die Kühlkanäle (52) für Kühlflüssigkeit aufweisen. Zwischen zwei zueinander benachbarten Batteriezellen (30,30') ist jeweils abwechselnd entweder eine Kühlplatte (50) oder ein Kompressionselement (40,40') angeordnet, an denen die Batteriezellen (30,30') jeweils unmittelbar anliegen.

## Beschreibung

Die Erfindung bezieht sich auf ein flüssigkeitsgekühltes Kraftfahrzeug-Traktionsbatteriemodul.

In einem Modulgehäuse des Traktionsbatteriemoduls sind mehrere Batteriezellen zu einem Zellstapel gestapelt, wobei die Batteriezellen in der Regel elektrisch miteinander in Reihe geschaltet sind. Um einerseits im Fahrbetrieb hohe Energieabgaben und im Ladebetrieb hohe Energieaufnahmen zu ermöglichen, sind Kraftfahrzeug-Traktionsbatteriemodule nach dem Stand der Technik modulintern flüssigkeitsgekühlt, wozu in dem Modulgehäuse Kühlleitstrukturen vorgesehen sein können. Über die Lebenszeit des Traktionsbatteriemoduls schwellen die plattenartigen Batteriezellen an, so dass zwischen den Batteriezellen komprimierbare Kompressionselemente vorgesehen sind, die elastisch oder plastisch verformbar sind und das Anschwellen der Batteriezellen durch eine entsprechende Verkleinerung kompensieren.

Verschiedene Beispiele für den Aufbau und die Gruppierung von Batteriezellen, und Kompressionselementen sind aus WO 2021/070 018 A1 bekannt. Allerdings nehmen die Kühlstrukturen und die Kompressionselemente innerhalb des Modulgehäuses erheblichen Bauchraum ein. Die Kühlung wird durch den Umstand erschwert, dass insbesondere plattenartige bzw. kissenartig ausgebildete Kompressionselemente nur eine sehr geringe Wärmeleitfähigkeit aufweisen können.

Aufgabe der Erfindung ist es demgegenüber, ein kompaktes Kraftfahrzeug-Traktionsbatteriemodul zu schaffen, das mit einer hohen Kühlleistung gekühlt werden kann.

Diese Aufgabe wird erfindungsgemäß gelöst mit einem Kraftfahrzeug-Traktionsbatteriemodul mit den Merkmalen des Anspruchs 1.

Das erfindungsgemäße Traktionsbatteriemodul weist ein steifes und fluiddichtes Modulgehäuse auf, in dem mehrere plattenartige und zueinander identische Batteriezellen eingehaust sind, die mit ihren Grundebenen parallel zueinander stehend oder liegend zu einem Zellstapel gestapelt sind. Mehrere Batteriezellen sind in der Regel elektrisch seriell miteinander verbunden bzw. verschaltet. Die Batteriezellen werden durch eine modulinterne Flüssigkeitskühlung gekühlt.

Zwischen zwei zueinander benachbarten Batteriezellen ist in abwechselnder Reihung entweder eine steife Kühlplatte angeordnet, die Kühlkanäle für eine Kühlflüssigkeit aufweist, oder ist ein elastisch oder plastisch deformiertes Kompressionselement vorgesehen. Die beiden großen Seitenflächen jeder Batteriezelle grenzen also jeweils unmittelbar einerseits an ein Kompressionselement und andererseits an eine Kühlplatte an. An eine Kühlplatte grenzen stets zwei Batteriezellen unmittelbar an. Eine Kühlplatte kühlt also stets zwei Batteriezellen unmittelbar, und mindestens ein Kompressionselement grenzt an zwei Batteriezellen unmittelbar an. Da sowohl eine Kühlplatte als auch ein Kompressionselement funktional jeweils zwei Batteriezellen zugeordnet ist, wird auf diese Weise in Richtung der Normalen zu den Platten-Grundebenen der Batteriezellen ein kompakter Aufbau realisiert. Dennoch ist eine hohe Kühlleistung dadurch ermöglicht und sichergestellt, dass jede Batteriezelle unmittelbar an eine Kühlplatte angrenzt, die Kühlkanäle für eine zirkulierende Kühlflüssigkeit aufweist.

Besonders bevorzugt handelt es sich bei dem Kühlkonzept um eine sogenannte Immersionskühlung, bei der die Batteriezellen stellenweise durch die Kühlflüssigkeit unmittelbar gekühlt werden. Allerdings werden hierbei lediglich Schmalseiten der Batteriezellen unmittelbar gekühlt, so dass erst über die durch die Kühlflüssigkeit über Kühlkanäle gekühlten Kühlplatten eine erhebliche Kühlleistung für das Traktionsbatteriemodul realisiert werden kann.

Das Modulgehäuse ist in der Regel rechteckig, steif und derart stabil ausgebildet, dass es als tragendes Element des Kraftfahrzeug-Rahmens dienen kann, und insbesondere der Querversteifung dienen kann. Vorzugsweise weist das Modulgehäuse mehrere zueinander und zu den Batteriezellen parallele Wandplatten auf, wobei an einer Wandplatte jeweils mittelbar oder unmittelbar ein Kompressionselement und an dem Kompressionselement unmittelbar eine Batteriezelle anliegt. Eine Wandplatte des Modulgehäuses kann eine äußere Gehäusewand sein, kann jedoch auch eine gehäuseinterne Trennwand sein. Die Wandplatten sind parallel zu der Grundebene der plattenförmigen Batteriezellen angeordnet. Unmittelbar an eine Wandplatte angrenzend ist also keine Kühlplatte vorgesehen. Durch jede Kühlplatte werden stets zwei Batteriezellen unmittelbar gekühlt.

Grundsätzlich können die Kompressionselemente auf vielfältige Weise ausgebildet sein. Beispielsweise können die Kompressionselemente plastisch oder elastisch verformbar ausgebildet sein. Die Kompressionselemente können als einzelne Federelemente ausgebildet sein. Vorzugsweise sind die Kompressionselemente plattenartig und/oder kissenartig und elastisch ausgebildet. Derartige Kompressionselemente nehmen die Kompressionskräfte großflächig auf, so dass die Batteriezellen bei ihrer (altersbedingten) Ausdehnung nicht beschädigt werden können.

Vorzugsweise sind die beiden die zwei benachbarten Batteriezellen berührenden Oberflächen der Kühlplatten vollständig ebenflächig ausgebildet, so dass die Batteriezellen auch bei relativ hohen Normalkräften, wie sie durch die altersbedingte Ausdehnung der Batteriezellen auftreten können, nicht beschädigt werden können.

Vorzugsweise ist die in dem Modulgehäuse fließende Kühlflüssigkeit eine dielektrische Flüssigkeit, die elektrisch nicht-leitend ist. Die Kühlflüssigkeit durchströmt die Kühlkanäle der Kühlplatten, umströmt die Batteriezellen jedoch stellenweise auch unmittelbar, beispielsweise an zwei, drei oder vier Schmalseiten der Batteriezellen. Die Kühlplatten grenzen besonders bevorzugt unmittelbar nur an die zwei angrenzenden Batteriezellen an, nicht jedoch an eine Wand des Modulgehäuses.

Vorzugsweise sind alle zueinander und zu den Batteriezellen parallelen Wandplatten des Pumpengehäuses einstückig miteinander ausgebildet und sind Teil eines einstückigen Metall-Extrusionsprofils. Vorzugsweise sind die Kompressionselemente jeweils mit mindestens einer der beiden benachbarten Batteriezellen verklebt. Ferner kann auch eine Kühlplatte mit der anderen Seite der Batteriezelle verklebt sein. Diese Verklebungen werden vor dem Zusammenbau des Traktionsbatteriemoduls vorgenommen, so dass jeweils eine zusammengeklebte Montageeinheit bestehend aus einem Kompressionselement, einer Batteriezelle und einer Kühlplatte in das Modulgehäuse eingeschoben wird. Hierdurch wird die Herstellung des Traktionsbatteriemodul vereinfacht, insbesondere bei einem Modulgehäuse, das im Wesentlichen aus einem einstückigen Extrusionsprofil gebildet ist.

Vorzugsweise ist zwischen einer Wandplatte des Modulgehäuses und dem nächsten Kompressionselement ein separates plattenförmiges Strukturbauteil aus glasfaserverstärktem Verbundstoff vorgesehen bzw. angeordnet. Hierdurch wird insbesondere die Crashsicherheit verbessert, da auch eine möglicherweise scharfkantige Bruchkante des Modulgehäuses nicht in die nächstliegende Batteriezelle eindringen kann.

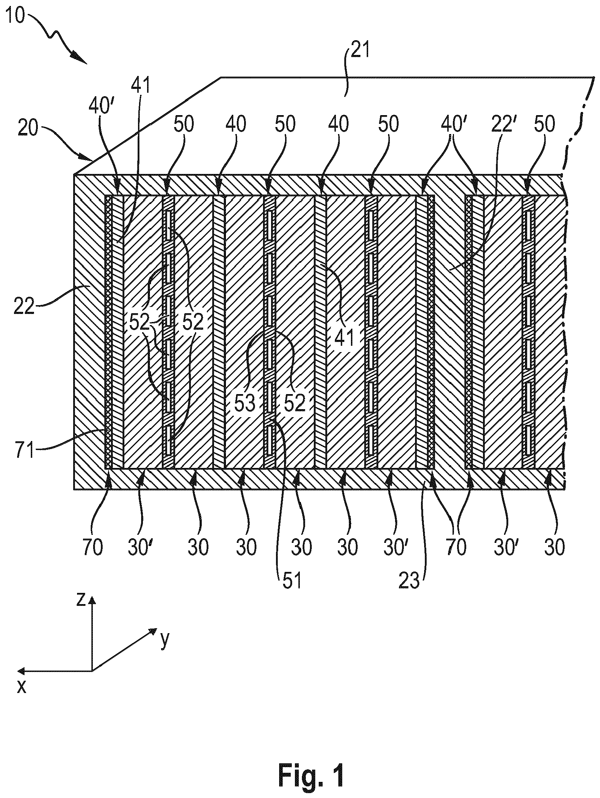

Im Folgenden wird ein Ausführungsbeispiel der Erfindung anhand der Zeichnung näher erläutert. Die Figur zeigt schematisch und perspektivisch ein Kraftfahrzeug-Traktionsbatteriemodul im vertikalen Querschnitt.

In der Figur ist perspektivisch im vertikalen Querschnitt ein Kraftfahrzeug-Traktionsbatteriemodul 10 mit einem steifen und fluiddichten Metall-Modulgehäuse 20 dargestellt. Die Nennspannung des Traktionsbatteriemoduls 10 beträgt beispielsweise 400 V oder 800 V, so dass es sich um ein sogenanntes Hochvolt-Traktionsbatteriemodul handelt. Unter "fluiddicht" ist vorliegend zu verstehen, dass zwar Kühlflüssigkeits-Anschlüsse vorgesehen sind, das Modulgehäuse 20 jedoch im übrigen fluiddicht ist. Das Traktionsbatteriemodul 10 ist rechteckig und in Fahrzeug-Querrichtung Y langgestreckt ausgebildet. Die dargestellte Schnittebene liegt vorliegend in einer vertikalen Querebene XZ des Traktionsbatteriemoduls 10, also in einer Vertikal-Längsebene des betreffenden Kraftfahrzeugs.

Von dem Modulgehäuse 20 ist eine oben in einer Horizontalebene liegende Deckenwand 21, eine untere in einer Horizontalebene liegende Bodenwand 23, eine als Seitenwand ausgebildete Wandplatte 22 sowie eine eine mittige Trennwand bildende Wandplatte 22' dargestellt. Die rechte Wandplatte ist nicht dargestellt. Alle Wandplatten 22,22', die Bodenwand 23 und die Deckenwand 21 sind einstückig miteinander ausgebildet und sind Teile eines Metall-Extrusionsprofils, das an seinen beiden Stirnseiten mit entsprechenden Deckeln verschlossen ist. Die Trennwand-Wandplatte 22' teilt den Innenraum des Modulgehäuses 20 in zwei Hälften, die spiegelbildlich zur Trennwand-Wandplatte 22' aufgebaut sind. Alle Wandplatten 22,22' liegen in einer vertikalen Querebene YZ.

Jede der beiden Modulgehäuse-Hälften ist zwischen den sie jeweils begrenzenden Wandplatten 22,22'jeweils nach einem bestimmten Stapelmuster mit mehreren Batteriezellen 30,30', mehreren deformierbaren Kompressionselementen 40,40', mehreren Kühlplatten 50 und zwei plattenförmigen Strukturbauteilen 70 gefüllt.

Die zueinander identischen Batteriezellen 30,30' sind als sogenannte Pouch-Zellen ausgebildet, und weisen jeweils eine Zellenspannung von 30-100 V auf.

Die Kühlplatten 50 sind alle identisch zueinander ausgebildet. Jede Kühlplatte 50 wird von einem Kühlplatten-Körper 51 gebildet, in dem in Fahrzeug-Querrichtung Y linear verlaufende Kühlkanäle 52 für die durch das Traktionsbatteriemodul 10 fließende Kühlflüssigkeit vorgesehen sind. Die beiden großen Oberflächen 53 jeder Kühlplatte 50 sind glatt und ebenflächig ausgebildet, und weisen keinerlei scharfkantige Vorsprünge auf. Die Kühlflüssigkeit ist eine elektrisch nichtleitende dielektrische Flüssigkeit, beispielsweise ein geeignetes Öl.

Auch die plattenartigen und elastisch verformbaren Kompressionselemente 40,40' sind alle jeweils identisch zueinander ausgebildet, und werden von einem geeigneten elastischen und vollflächigen Kunststoff-Körper 41 gebildet.

An jede vertikale Wandplatte 22,22' grenzt jeweils das Strukturbauteil 70 an, das ebenfalls plattenförmig ausgebildet ist und von einem plattenartigen Körper 71 aus einem glasfaserverstärkten Verbundstoff gebildet ist.

Die Strukturbauteile 70, die Batteriezellen 30,30', die Kompressionselemente 40,40' und die Kühlplatten 50 stehen alle parallel zueinander in einer vertikalen Querebene YZ und weisen jeweils ungefähr die gleiche Grundfläche auf. Die vorgenannten Elemente sind in einer bestimmten Reihung und Ordnung zueinander angeordnet: Zwischen zwei zueinander benachbarten Batteriezellen 30,30' ist jeweils abwechselnd entweder eine Kühlplatte 50 oder ein Kompressionselement 40,40' angeordnet, wobei die Batteriezellen 30,30'jeweils unmittelbar an der betreffenden Kühlplatte 50 oder unmittelbar an dem betreffenden Kompressionselement 40,40' anliegend angeordnet sind. Zwischen einem an eine Wandplatte 22,22' mittelbar angrenzenden Kompressionselement 40' und der betreffenden Wandplatte 22,22' ist jeweils das plattenförmige Strukturbauteil 70 angeordnet.

Für eine einfachere Montage sind vor der Montage alle Batteriezellen 30,30' jeweils mit einem angrenzenden Kompressionselement 40,40' verklebt. Selbstverständlich können auch größere Einheiten einschließlich einer Kühlplatte 50 bereits über eine entsprechende Verklebung mit anderen Elementen vor dem Zusammenbau zu einer Montageeinheit zusammengefasst sein.

## Patentansprüche

1. Kraftfahrzeug-Traktionsbatteriemodul (10) mit einem steifen und fuiddichten Modulgehäuse (20), in dem mehrere plattenartige identische Batteriezellen (30,30') eingehaust sind, wobei zwischen den Batteriezellen (30,30') mehrere identische deformierbare Kompressionselemente (40,40') vorgesehen sind und die Batteriezellen (30,30') durch eine modulinterne Flüssigkeitskühlung gekühlt werden,
**dadurch gekennzeichnet,**
**dass** zwischen zwei zueinander benachbarten Batteriezellen (30,30') steife Kühlplatten (50) angeordnet sind, die Kühlkanäle (52) für Kühlflüssigkeit aufweisen, und
**dass** zwischen zwei zueinander benachbarten Batteriezellen (30,30') immer jeweils abwechselnd entweder eine Kühlplatte (50) oder ein Kompressionselement (40,40') angeordnet ist, an denen die Batteriezellen (30,30') jeweils unmittelbar anliegen.

2. Kraftfahrzeug-Traktionsbatteriemodul (10) nach Anspruch 1, wobei das Modulgehäuse (20) mehrere zueinander und zu den Batteriezellen (30,30') parallele Wandplatten (22,22') aufweist, wobei an einer Wandplatte (22,22') jeweils ein Kompressionselement (40') und an dem Kompressionselement (40') unmittelbar eine Batteriezelle (30') anliegt.

3. Kraftfahrzeug-Traktionsbatteriemodul (zehn) nach einem der vorangegangenen Ansprüche, wobei die Kompressionselemente (40,40') plattenartig ausgebildet sind.

4. Kraftfahrzeug-Traktionsbatteriemodul (10) nach einem der vorangegangenen Ansprüche, wobei die beiden die jeweils benachbarten Batteriezellen (30,30') berührenden Oberflächen (53) der Kühlplatten (50) ebenflächig ausgebildet sind.

5. Kraftfahrzeug-Traktionsbatteriemodul (10) nach einem der vorangegangenen Ansprüche, wobei die Kompressionselemente (40,40') jeweils mit mindestens einer der beiden benachbarten Batteriezellen (30,30') verklebt sind.

6. Kraftfahrzeug-Traktionsbatteriemodul (10) nach einem der vorangegangenen Ansprüche, wobei die in den Kühlplatten-Kühlkanälen (52) fließende Kühlflüssigkeit eine dielektrische Flüssigkeit ist, die die Batteriezellen (30,30') stellenweise unmittelbar kühlt.

7. Kraftfahrzeug-Traktionsbatteriemodul (10) nach einem der vorangegangenen Ansprüche, wobei alle zueinander parallelen Wandplatten (22,22') des Modulgehäuses (20) einstückig miteinander ausgebildet sind und Teil eines Extrusionsprofils sind.

8. Kraftfahrzeug-Traktionsbatteriemodul (10) nach einem der vorangegangenen Ansprüche, wobei zwischen einer Wandplatte (22,22') und dem nächsten Kompressionselement (40') ein separates plattenförmiges Strukturbauteil (70) aus glasfaserverstärktem Verbundstoff angeordnet ist.
